# DEMANDE DE BREVET EUROPEEN

(11) **EP 1 004 246 A1**
(43) Date de publication de la demande: **31.05.2000**
(21) Numéro de dépôt: 99402790.2
(22) Date de dépôt: 09.11.1999
(51) Int. Cl.: A23L 3/358, A23L 3/3589, A23B 4/24, A23B 4/26, A23B 7/157, A23B 7/158

(54) **Procédé et installation de traitement d'un article à l'eau ozonée**

(30) Priorité: 24.11.1998 FR 9814783
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Crisinel, Pascal, 78280 Guyancourt (FR); Prost, Lucie, 75006 Paris (FR)
(74) Mandataire: Mellul, Sylvie Lisette

(57) **Abrégé**

L'invention concerne un procédé de traitement d'un produit, notamment alimentaire, traitement comportant une étape de mise en contact du produit avec une solution d'eau ozonée dans un bac de traitement, la solution subissant une agitation durant tout ou partie de la phase de mise en contact, le procédé se caractérisant en ce que tout ou partie de l'agitation est d'origine hydraulique, par le fait que l'on établie une recirculation d'au moins une partie de la solution du bac pour réintroduire cette solution recirculée en un ou plusieurs point de la structure du bac, afin d'établir au sein du bac un régime d'eau turbulent, apte à permettre la réalisation d'un temps de contact suffisant entre le produit et l'ozone dissous dans l'eau, pour atteindre le niveau de traitement requis.

## Description

La présente invention concerne un procédé et une installation de traitement de produits, notamment de produits alimentaires à l'eau ozonée, visant notamment à obtenir selon les cas un blanchiment, une désinfection, ou encore une désodorisation des produits ainsi traités.

On sait que la littérature concernant le traitement à l'ozone d'articles tels les instruments médicaux, ou bien de produits tels les produits alimentaires, en particulier dans le domaine du lavage des produits alimentaires à l'eau ozonée (produits de la mer tels que poissons, crustacés, mais aussi fruits et légumes ...), est extrêmement abondante, on se reportera notamment aux documents FR-385 815, EP-294 502, FR-797 928, CA-2 102 362 ou encore US-4 559 902.

Une des applications très prometteuse aujourd'hui est effectivement le lavage des produits alimentaires à l'eau ozonée, en particulier le lavage des fruits et légumes ou encore des produits de la mer. Ces lavages à l'eau ozonée sont tout particulièrement proposés en remplacement du lavage à l'eau chlorée, le chlore subissant progressivement dans cette industrie de très sévères limitations, voire une interdiction pure et simple.

Dans ces procédés connus de lavage à l'eau simple ou éventuellement chlorée, on sait que l'efficacité du lavage est liée à l'énergie mise en oeuvre, aussi utilise-t-on couramment une agitation de l'eau du bac, typiquement réalisée par l'injection d'air comprimé dans la solution. Cette agitation a notamment pour rôle de décrocher les saletés et autres charges organiques des produits à traiter, mais également de renouveler les molécules de désinfectant à la surface de ces produits pour augmenter ainsi le transfert désinfectant/produit et améliorer l'efficacité du lavage.

Les travaux menés à bien par la Demanderesse ont permis de démontrer que dans le cas d'un lavage à l'eau ozonée, une telle agitation par voie pneumatique n'est pas souhaitable, dans la mesure où elle favorise les phénomènes de dégazage et donc la perte d'une partie de l'ozone dissous dans l'eau de lavage.

Le régime d'agitation à mettre en place dans le cas d'un lavage à l'eau ozonée est en effet selon ces travaux encore plus critique, et on peut à cela avancer notamment les raisons suivantes :
- l'ozone est un oxydant beaucoup plus puissant que le chlore et il entraîne un « abattement » bien plus grand lors de la mise en contact avec les produits. Ce phénomène d'abattement se caractérise pour la plupart des produits par une diminution brutale de la teneur en ozone dans la solution dans les premières minutes de la mise en contact, liée à la charge organique des produits et à leur surface d'échange (par exemple cas des crudités où la surface d'échange est considérablement augmentée du fait de l'état divisé) ;
- le couplage ici avec une agitation performante est alors encore plus crucial (homogénéisation en ozone du bac).

La présente invention vise notamment à remédier aux problèmes techniques précédemment évoqués.

Pour ce faire, le procédé de traitement d'un produit selon l'invention, traitement comportant une étape de mise en contact du produit avec une solution d'eau ozonée dans au moins un bac de traitement alimenté en eau ozonée, la solution subissant une agitation durant tout ou partie de la phase de mise en contact, se caractérise en ce que tout ou partie de ladite agitation est d'origine hydraulique, par le fait que l'on établie une recirculation d'au moins une partie de la solution du bac pour réintroduire cette solution recirculée en un ou plusieurs point de la structure du bac, permettant par cette réintroduction d'établir au sein du bac un régime d'eau turbulent, apte à permettre la réalisation d'un temps de contact suffisant entre le produit et l'ozone dissous dans l'eau, pour atteindre le niveau de traitement requis.

Le procédé selon l'invention peut également adopter l'une ou plusieurs des caractéristiques suivantes :
- ledit régime turbulent est obtenu par la mise en place dans le bac d'un taux de recirculation en eau correspondant à 5 à 50 volumes du bac par heure ;
- la teneur en ozone dissous de ladite alimentation en eau ozonée du bac de traitement est comprise entre 0,1 et 20 ppm, et plus préférentiellement comprise entre 0,5 et 15 ppm ;
- on régule la teneur en ozone dissous dans la solution contenue dans le bac de traitement dans l'intervalle 0,1 à 10 ppm et plus préférentiellement dans l'intervalle 0,5 à 5 ppm ;
- ledit au moins un bac de traitement est de forme sensiblement parallélépipédique, définissant ainsi une paroi frontale du bac, des parois latérales, et une ou plusieurs parois formant le fond du bac, la où lesdites arrivées de solution recirculée au niveau de la structure du bac étant alors positionnées selon l'une ou plusieurs combinés des configurations suivantes :
   i) la ou lesdites arrivées de solution recirculée sont constituées par au moins une rampe de buses d'injection débouchant dans le bac au niveau d'au moins l'une de ces parois latérales ;
   j) la ou lesdites arrivées de solution recirculée sont constituées par au moins une rampe de buses d'injection débouchant dans le bac au niveau de sa paroi frontale ;
   k) la ou lesdites arrivées de solution recirculée sont constituées par au moins un couteau, débouchant dans le bac au niveau de la ou les parois formant le fond de ce bac.
- la ou lesdites arrivées de solution recirculée sont constituées par au moins deux rampes de buses d'injection débouchant dans le bac au niveau d'au moins l'une de ces parois latérales, les rampes étant mises en fonctionnement de façon séquencée pour obtenir le dit temps de contact requis ;
- la ou lesdites arrivées de solution recirculée sont constituées par au moins deux rampes de buses d'injection débouchant dans le bac au niveau de sa paroi frontale, les rampes étant mises en fonctionnement de façon séquencée pour obtenir le dit temps de contact requis ;
- la ou lesdites arrivées de solution recirculée sont constituées par au moins deux couteaux, débouchant dans le bac au niveau de la ou les parois formant le fond de ce bac, les couteaux étant mis en fonctionnement de façon séquencée pour obtenir le dit temps de contact requis ;
- on règle le débit de solution recirculée injectée dans le bac afin de maîtriser l'avancement des produits dans le bac, et obtenir ainsi le dit temps de contact requis.

Comme on l'aura compris à la lecture de ce qui précède, la présente invention repose sur la réalisation d'une agitation de type hydraulique de l'eau ozonée du bac de traitement, à l'aide des arrivées d'eau ozonée recirculée du bac, réalimentant le bac en des positions choisies de ce bac, de façon à mettre en place un régime turbulent à l'intérieur de la solution (ce que l'on doit entendre par le fait que le bac ne connaît pas de zones de stagnation d'eau ou de zones de vitesse de déplacement de l'eau nulle), ce régime turbulent permettant de réaliser le temps de contact suffisant entre le produit et l'ozone dissous dans l'eau du bac pour atteindre le niveau de traitement requis.

On comprendra également que le « traitement » à l'eau ozonée selon l'invention vise, selon le produit considéré, mais également selon le cahier des charges recherché par chaque site utilisateur particulier, à réaliser l'une ou plusieurs des actions parmi les actions suivantes : un blanchiment, une désinfection, ou encore une désodorisation du produit.

Si dans ce qui précède et ce qui suit, l'invention est tout partiellement illustrée dans le cas des produits alimentaires, on a compris également qu'elle s'applique beaucoup plus largement à d'autres produits ou articles tels les pièces et matériels médicaux. On parlera alors indifféremment de « produit » ou « article ».

Toujours à titre illustratif, pour exemplifier la notion de « temps de contact suffisant entre le produit et l'ozone » selon l'invention, on peut considérer l'exemple de produits alimentaires et plus précisément de crudités telles que les carottes, pour lesquelles la qualité des produits après traitement sera évaluée par une mesure de la FAMT (Flore Aérobie Mesophile Totale, souvent appelée dans cette industrie « la Flore Totale »).

La solution aqueuse de traitement selon l'invention peut comprendre, selon l'application considérée, outre l'eau et l'ozone, des additifs tels que des acides ou des bases dont le rôle peut être notamment d'ajuster le pH du milieu.

En considérant dans ce qui suit le cas particulier des produits alimentaires, on sait que les installations de lavage de produits alimentaires comportent traditionnellement au moins un bac de lavage, mais couramment plusieurs de ces bacs de lavage, l'eau d'au moins un de ces bacs étant par exemple chlorée. Selon la présente invention de lavage de produits à l'eau ozonée, chaque bac de traitement pourra donc être le seul bac de lavage d'une ligne, ou bien pourra être précédé ou suivi sur la ligne d'un ou plusieurs bacs de lavage à l'eau, éventuellement additivée, chaque situation dépendra on le conçoit du type de produit et de l'état initial de propreté des produits traités.

D'autres caractéristiques et avantages de l'invention ressortiront de la description suivante donnée uniquement à titre illustratif et faite en référence aux dessins annexés sur lesquels :
- la figure 1 est une représentation schématique d'une installation de lavage de produits alimentaires à l'eau ozonée selon l'état de la technique ;
- les figures 2, 2A, 2B, et 2C, illustrent de façon schématique et partielle une installation de lavage à l'eau ozonée conforme à l'invention ;
- les figures 3 et 3A illustrent un autre mode de réalisation d'une installation selon l'invention ;
- la figure 4 illustre les résultats obtenus selon l'invention à l'aide d'une installation conforme à la figure 2 dans le cas de carottes râpées, et la comparaison de ces résultats à ceux obtenus selon l'état de la technique par lavage chloré ;
- la figure 5 illustre également des résultats obtenus selon l'invention sur des carottes râpées, cette fois en terme de log₁₀ de coliformes ;
- les figures 6 et 7 illustrent pour leur part le suivi vitaminique des carottes râpées traitées selon l'invention, la figure 6 correspondant aux résultats de teneur en a carotène, la figure 7 correspondant aux résultats obtenus en terme de teneur en β carotène.

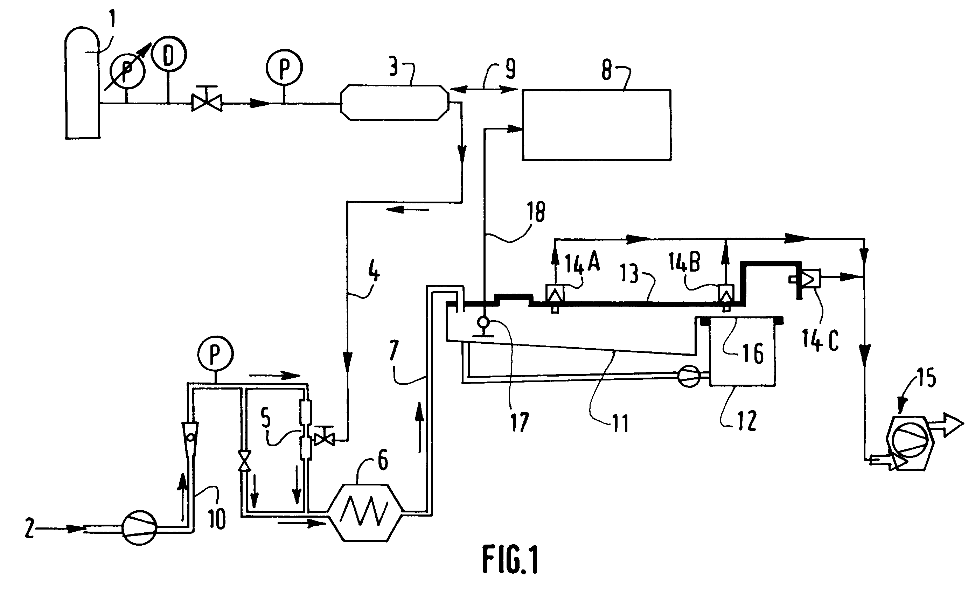

On reconnaît sur la figure 1 la présence d'un bac 11 de lavage de produits alimentaires à l'eau ozonée, suivi d'un bac 12 de récupération et recyclage d'eau, ce bac 12 étant surmonté d'une grille 16 au-dessus de laquelle peuvent circuler et s'égoutter les produits en provenance du bac 11 de lavage.

L'eau de lavage étant ozonée , pour des raisons de sécurité, l'ensemble constitué du bac de lavage 11 et du bac de recyclage 12, est surmonté d'une structure de capotage 13 représentée ici en traits épais, structure de capotage de laquelle sont solidaires des systèmes d'aspiration 14A, 14B, et 14C, renvoyant l'atmosphère aspirée vers un système 15 d'extraction et d'épuration d'ozone.

Pour alimenter le bac 11 en eau ozonée, on dispose sur cette installation d'un ozoneur 3, alimenté en air ou encore en un mélange gazeux initial comportant de l'oxygène en provenance d'une source gazeuse 1, le mélange résultant comportant de l'oxygène et de l'ozone produit par l'ozoneur 3 étant alors dirigé via la ligne de gaz 4 vers un système d'ozonation d'eau.

En effet, en provenance d'une source primaire d'eau 2, de l'eau est dirigée via la ligne 10 jusqu'à un système venturi 5, au sein duquel est injecté le mélange gazeux ozoné circulant dans la ligne 4 (système de transfert gaz/ liquide basé sur un effet venturi bien connu du domaine de l'ozonation).

L'eau ainsi ozonée dans le venturi 5 parvient ensuite à un contacteur 6 (par exemple un mélangeur statique, ou encore une tour de contact) avant de rejoindre via la ligne 7, le bac de lavage 11.

L'installation de lavage selon l'état de la technique de la figure 1, est par ailleurs régulée de la façon suivante : une analyse 17 de la teneur en ozone dissous de l'eau du bac de lavage 11 est effectuée et envoyée (flèche 18 sur la figure) vers un automate programmable 8, apte à comparer le résultat de la mesure ainsi effectuée avec une consigne de teneur en ozone dissous qu'il est souhaitable d'établir dans le bac 11, et rétroagir, le cas échéant, selon le résultat de cette comparaison, sur la puissance de l'ozoneur 3 (flèche 9 sur la figure) pour augmenter ou diminuer la teneur en ozone du mélange gazeux dirigé via la ligne 4 vers le flux d'eau en provenance de la source 2.

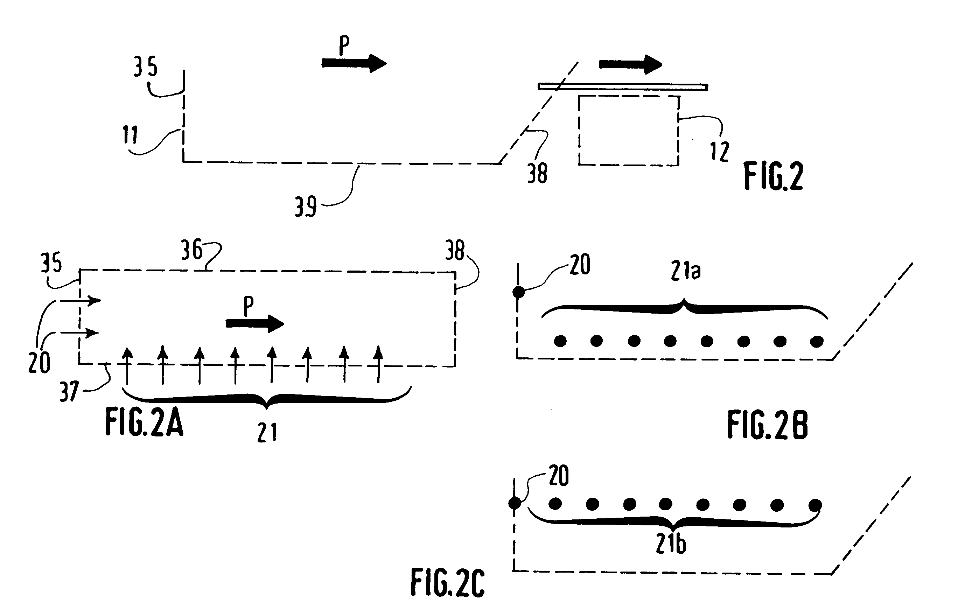

On reconnaît sur la figure 2 une vue partielle de l'installation de la figure 1, avec la présence du bac de lavage 11 suivi du bac d'essorage 12, la flèche « P » en trait épais représentant dans tous les cas le sens de circulation des produits dans l'installation.

Contrairement à la figure 1, le bac de traitement de la figure 2 est ici équipé d'un système de buses d'injection d'eau ozonée en provenance du bac 12, recirculée selon l'invention, permettant de réaliser une agitation hydraulique de l'eau du bac de traitement, apte à réaliser le temps de contact nécessaire entre les produits à traiter et l'ozone dissous dans l'eau du bac, afin de permettre d'atteindre le niveau de traitement requis par le site utilisateur considéré.

Le système de buses d'arrivée d'eau recirculée dans le bac de la figure 2 est maintenant décrit plus en détail dans ce qui suit, en référence aux figures 2A,2B, et 2C.

Le bac 11 est de forme sensiblement parallélépipédique, définissant ainsi, en considérant le sens d'avancement P des produits, une paroi frontale 35, deux parois latérales 36 et 37, une paroi avale 38, ainsi qu'une paroi formant le fond du bac 39 (la figure 2 illustre un bac à fond plat, mais on sait que l'on connaît dans cette industrie des bacs à fond sensiblement conique par exemple).

Le système d'injection d'eau recirculée dans le bac 11 comprend alors deux rampes ou séries de buses d'injection, une première série de buses 20 au niveau de la paroi frontale du bac, et une seconde série de buses 21 au niveau de la paroi latérale 37 du bac.

La figure 2A est une vue de dessus du bac 11, tandis que la figure 2B est une vue de coté i. e en coupe verticale et longitudinale du bac 11.

La figure 2B illustre alors un premier mode de réalisation des buses d'injection d'eau recirculée dans le bac 11, on y reconnaît la présence des buses frontales 20, et d'une série de huit buses latérales 21a situées dans la partie basse du bac 11.

La figure 2C illustre pour sa part, à nouveau par une vue en coupe verticale et longitudinale du bac 11, un autre mode de réalisation où l'on reconnaît les buses d'injection 20, mais où cette fois les buses d'injection latérales 21 sont situées en position haute sur la paroi latérale 37 (les buses latérales sont ici numérotées 21 b).

On pourrait bien entendu par exemple combiner les structures de buses d'injection de la figure 2B, et 2C, en ayant à la fois la présence de buses latérales en position basse et en position haute dans le bac 11.

On conçoit alors que le mode de réalisation de la figure 2 est particulièrement efficace pour apporter une réponse technique au problème à la base de la présente invention :
- la combinaison des buses frontales 20 et des buses latérales 21 permet d'établir une agitation hydraulique des produits à l'intérieur du bac, permettant de mettre en place un régime d'eau turbulent à l'intérieur de ce bac, en évitant les zones de stagnation d'eau et de vitesse nulle à l'intérieur du bac ;
- de telles arrivées d'eau recirculée permettent non seulement de contrôler l'agitation du produit dans l'eau du bac, mais également l'avancement des produits dans le bac de traitement en direction du bac d'essorage 12, donc globalement le temps de contact entre les produits traités et l'ozone dissous dans l'eau du bac, pour parvenir, au niveau de la sortie des produits par la paroi avale 38, au niveau de traitement requis par le site d'utilisateur considéré ;
- la série de buses d'injection frontales 20 est tout particulièrement avantageuse pour certains produits, afin d'éviter l'agglomération des produits à traiter en tête du bac 11 ;
- la présence des buses d'injection latérales 21 est quant à elle tout particulièrement avantageuse pour certains produits, afin de réaliser un brassage et un avancement effectif des produits dans le bac ;
- selon un mode avantageux de mise en oeuvre de l'invention, les buses d'injection 21 sont orientables, afin de maîtriser l'avancement des produits, donc le temps de présence des produits dans le bac et donc ainsi le temps de contact de ces produits avec l'ozone dissous ;
- selon un autre mode de réalisation avantageux de l'invention, les buses d'injection d'eau ozonée latérales 21 sont mises en oeuvre de façon sequencée, c'est à dire l'une après l'autre en considérant le sens de déplacement des produits dans le bac 11, ici encore afin de permettre un meilleur contrôle de l'avancement des produits dans le bac, donc du temps de présence des produits dans ce bac.

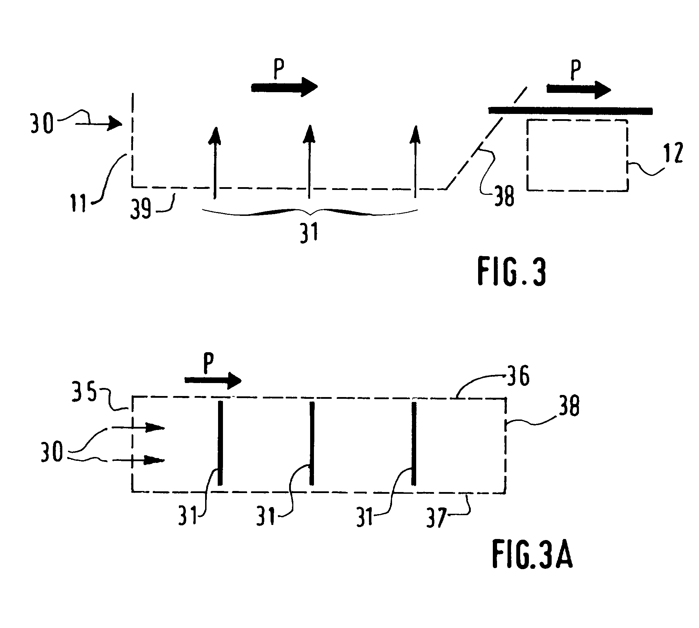

Les figures 3 et 3A illustrent de façon schématique et en vue partielle un autre mode de réalisation d'une installation sur l'invention, où l'on reconnaît à nouveau un bac 11 de lavage à l'eau ozonée, suivi du bac 12 d'essorage.

Le bac 11 est ici encore de forme sensiblement parallélépipédique, et on y reconnaît à nouveau, en considérant le sens de déplacement des produits P dans l'installation, la présence d'une paroi frontale 35, deux parois latérales 36 et 37, d'une paroi de sortie 38, et d'une paroi 39 formant le fond du bac.

Le système d'injection d'eau ozonée est ici formé par une première série de buses frontales 30, complétée par une série de trois couteaux d'eau ozonée recirculée 31, débouchant dans le bac au niveau de la paroi de fond 39.

Ici encore on conçoit que le système d'injection représenté dans le cadre des figures 3 et 3A apporte une solution extrêmement efficace au problème technique à la base de la présente invention, en apportant un contrôle performant de l'agitation de l'eau du bac, donc de l'avancement des produits à l'intérieur de ce bac, c'est à dire nécessairement du temps de séjour des produits et du temps de contact de ces produits avec l'ozone dissous dans l'eau du bac.

Ici encore, on notera que selon un mode de réalisation avantageux de l'invention, les couteaux d'eau ozonée 31 fonctionnent selon un mode séquencé, c'est-à-dire qu'ils sont mis en marche l'un après l'autre en considérant le sens d'avancement des produits dans le bac.

Une installation telle que celle décrite en relation avec la figure 2 a été utilisée pour traiter selon l'invention des carottes, en vue de fabriquer des carottes râpées.

L'installation comprenait donc un seul bac de lavage 11, suivi du bac 12 de récupération.

Le premier bac a un volume de 900 litres et est équipé en terme de buses de recirculation d'eau de la façon suivante :
- une première série de 2 buses 20 frontales ;
- une seconde série de 7 buses latérales 21a situées au voisinage du fond du bac ;
- une dernière série de 7 buses latérales 21b, orientables, situées dans la partie haute du bac à la limite de la surface du liquide.

Un jeu de vannes permet bien entendu de régler les débits hydrauliques, et donc l'avancement et la qualité du brassage des produits avec l'eau ozonée du bac.

Le débit total d'eau recirculé injecté était proche de 30 m³/h, le diamètre des buses latérales hautes étant proche de 10 mm, alors que le diamètre des buses latérales basses était proche de 20 mm.

Le temps de contact des produits avec l'eau ozonée était dans une telle configuration proche de la minute.

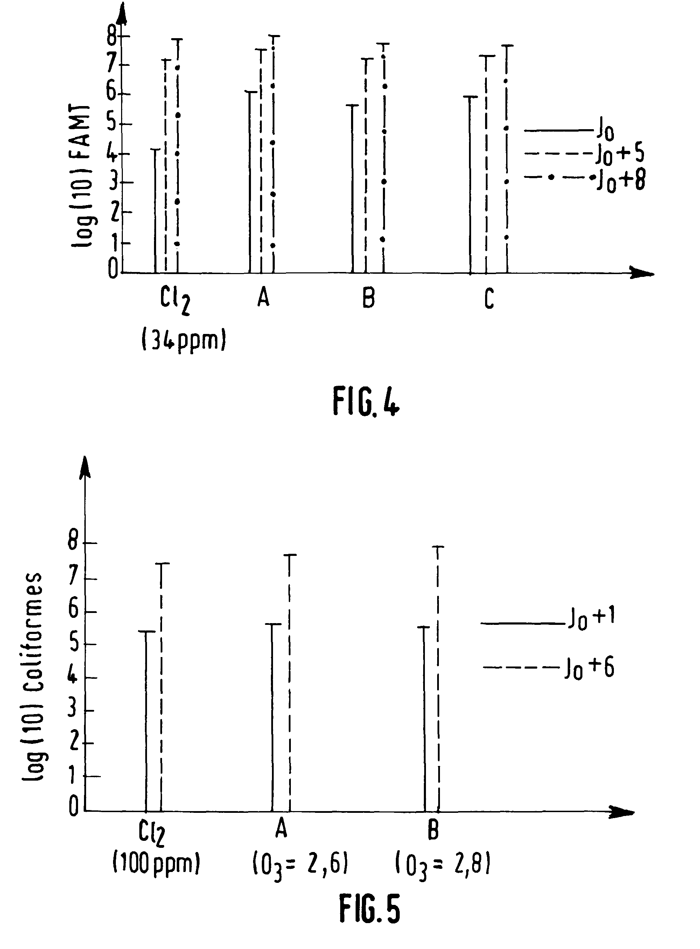

Les figures 4, 5, 6, et 7 illustrent les résultats comparatifs obtenus à l'aide d'une telle configuration dans le cas du traitement de carottes, les carottes étant râpées après traitement et suivies du point de vue microbiologique, et vitaminique.

Ainsi, la figure 4 illustre les résultats comparatifs obtenus dans le cas du traitement de carottes, les carottes étant râpées après traitement et suivies du point de vue FAMT. Les résultats présentés en ordonnées sont donc le logo de la flore totale FAMT, alors qu'en abscisses, on a représenté les résultats obtenus respectivement pour 4 lots de carottes : un premier lot traité selon le procédé habituel du site utilisateur de lavage à l'eau chlorée (34 ppm de chlore), puis successivement des lots A, B, et C traités à l'eau ozonée selon l'invention.

Dans tous les cas, trois types de résultats sont fournis, le log de la flore totale à J₀ (immédiatement après traitement), à J₀ + 5, et à J₀ + 8 jours.

Dans les cas A, B, et C de lavage à l'eau ozonée selon l'invention, le taux d'ozone dissous dans l'eau du bac était proche de 2,6 ppm, pour un temps de contact des produits avec l'eau ozonée proche de la minute.

On constate alors clairement à la lecture de cette figure le fait que les résultats obtenus par lavage à l'eau ozonée selon l'invention sont parfaitement comparables à ceux obtenus par le site utilisateur par lavage à l'eau chlorée, les résultats étant tout à fait reproductibles sur plusieurs lots de carottes traités.

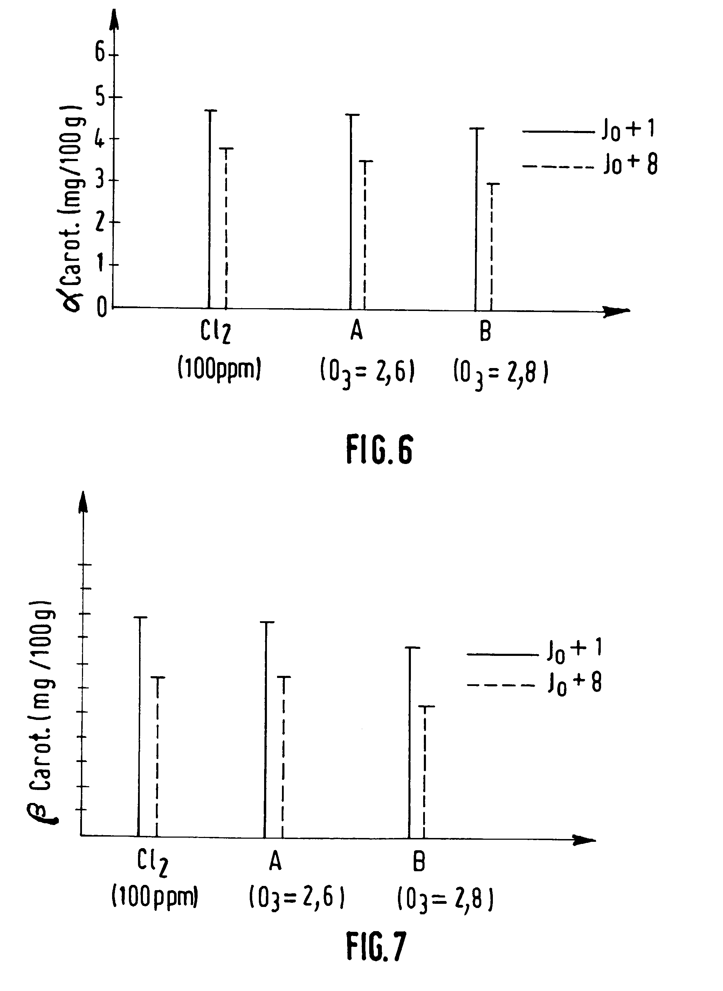

La figure 5 illustre cette fois les résultats obtenus en terme de log₁₀ de coliformes.

On a comparé ici un premier lot de carottes traité à l'eau chlorée selon le procédé habituel de lavage du site utilisateur, un lot A et un lot B lavés à l'eau ozonée selon l'invention avec des taux d'ozone dissous respectivement égaux à environ 2,6 mg/l et 2,8 mg/l. Le temps de contact dans le cas des lavages à l'eau ozonée était ici voisin de 80 secondes.

On notera que dans le cas du lavage à l'eau chlorée, on a utilisé ici une dose de 100 ppm de chlore dans l'eau de lavage, ce qui représente déjà une dose élevée, supérieure à ce qui est utilisé traditionnellement par l'Industrie Alimentaire.

On notera finalement que deux types de résultats sont ici représentés : en ligne pleine le log au temps J₀ + 1 (J₀ représentant le moment immédiatement après traitement), et en ligne tiretée à J₀ + 6 jours.

Ici encore, la lecture de la figure 5 montre sans ambiguïté qu'en terme également de coliforme, les carottes râpées obtenues à partir de carottes traitées selon l'invention sont de qualité au moins équivalentes à celles obtenues par lavage à l'eau chlorée, alors que soulignons-le encore, le taux de chlore de l'eau utilisée pour le premier essai comparatif, c'est à dire 100 ppm, est déjà très significatif.

On a par ailleurs effectué un suivi vitaminique des carottes râpées obtenues à partir de carottes traitées à l'eau ozonée selon l'invention, et comparé les résultats obtenus avec ceux obtenus dans le cas des carottes lavées à l'eau chlorée à 100 ppm de chlore.

Les résultats correspondant sont rapportés dans le cadre des figures 6 et 7, la figure 6 illustrant les résultats de teneur en α carotène, la figure 7 illustrant les résultats de teneur en β carotène.

Ici encore on compare les lots suivants : un lot de carottes râpées correspondant à des carottes traitées à l'eau chlorée selon le procédé du site utilisateur, la teneur en chlore de l'eau de lavage étant très significative (100 ppm), un lot A de carottes râpées correspondant à des carottes lavées selon l'invention à l'aide d'une teneur en ozone dans l'eau de lavage voisine de 2,6 ppm, et un lot B lavé ici encore selon l'invention à l'aide d'une teneur en ozone voisine de 2,8 ppm (dans les deux cas de lavage selon l'invention, le temps de contact moyen était voisin de 80 secondes).

On notera enfin que pour chaque lot, deux types d'évaluation ont été effectués, une évaluation 24 heures après lavage (traits continus sur la figure), et une évaluation 8 jours après le lavage (traits tiretés sur la figure).

On constate alors à la lecture de ces figures qu'au moins un des traitements à l'eau ozonée pratiqué selon l'invention (celui utilisant 2,6 ppm d'ozone dissous) maintient le contenu vitaminique des carottes râpées de façon tout à fait comparable au lavage à l'eau chlorée selon l'état de la technique.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art dans le cadre des revendications ci-après.

## Revendications

1. Procédé de traitement d'un produit, le traitement comportant au moins une étape de mise en contact du produit avec une solution d'eau ozonée dans au moins un bac (11) de traitement alimenté en eau ozonée, la solution subissant une agitation durant tout ou partie de la phase de mise en contact, caractérisé en ce que tout ou partie de ladite agitation est d'origine hydraulique, par le fait que l'on établie une recirculation d'au moins une partie de la solution du bac pour réintroduire cette solution recirculée dans le bac en un ou plusieurs point (20, 21, 21a, 21b) de sa structure, permettant par cette réintroduction d'établir au sein du bac un régime d'eau turbulent, apte à permettre la réalisation d'un temps de contact suffisant entre le produit et l'ozone dissous dans l'eau, pour atteindre le niveau de traitement requis.

2. Procédé selon la revendication 1, caractérisé en ce que le dit au moins un bac de traitement est de forme sensiblement parallélépipédique, définissant ainsi une paroi frontale (35) du bac, des parois latérales (36, 37), ainsi qu'une ou plusieurs parois (39) formant le fond du bac, et en ce que la où lesdites arrivées de solution recirculée au niveau de la structure du bac sont alors positionnées selon l'une ou plusieurs combinés des configurations suivantes :
i) la ou lesdites arrivées de solution recirculée sont constituées par au moins une rampe (21, 21a, 21b) de buses d'injection débouchant dans le bac au niveau d'au moins l'une de ses parois latérales ;
j) la ou lesdites arrivées de solution recirculée sont constituées par au moins une rampe (20) de buses d'injection débouchant dans le bac au niveau de sa paroi frontale ;
k) la ou lesdites arrivées de solution recirculée sont constituées par au moins un couteau (31), débouchant dans le bac au niveau de la ou les parois formant le fond de ce bac.

3. Procédé selon la revendication 2, caractérisé en ce la ou lesdites arrivées de solution recirculée sont constituées par au moins deux rampes de buses d'injection (21a, 21b) débouchant dans le bac au niveau d'au moins l'une de ces parois latérales, les rampes étant mises en fonctionnement de façon séquencée pour obtenir le dit temps de contact requis.

4. Procédé selon la revendication 2, caractérisé en ce que la ou lesdites arrivées de solution recirculée sont constituées par au moins deux rampes (30) de buses d'injection débouchant dans le bac au niveau de sa paroi frontale, les rampes étant mises en fonctionnement de façon séquencée pour obtenir le dit temps de contact requis .

5. Procédé selon la revendication 2, caractérisé en ce que la ou lesdites arrivées de solution recirculée sont constituées par au moins deux couteaux (31), débouchant dans le bac au niveau de la ou les parois formant le fond de ce bac, les couteaux étant mis en fonctionnement de façon séquencée pour obtenir le dit temps de contact requis .

6. Procédé selon l'une des revendications précédentes, caractérisé en ce que ledit régime turbulent est obtenu par la mise en place dans le bac d'un taux de recirculation en eau correspondant à 5 à 50 volumes du bac par heure.

7. Procédé selon l'une des revendications précédentes, caractérisé en ce que la teneur en ozone dissous de ladite alimentation en eau ozonée du bac de traitement est comprise entre 0,1 et 20 ppm .

8. Procédé selon la revendication 7, caractérisé en ce que la dite teneur en ozone dissous de ladite alimentation en eau ozonée du bac de traitement est comprise entre 0,5 et 15 ppm.

9. Procédé selon la revendication 7 ou 8, caractérisé en ce que l'on régule la teneur en ozone dissous de la solution contenue dans le bac de traitement dans l'intervalle 0,1 à 10 ppm et plus préférentiellement dans l'intervalle 0,5 à 5 ppm .

10. Procédé selon l'une des revendications précédentes, caractérisé en ce que l'on règle le débit de solution recirculée injectée dans le bac afin de maîtriser l'avancement des produits dans le bac, et obtenir ainsi le dit temps de contact requis.

11. Installation de traitement d'un produit, le traitement comportant au moins une étape de mise en contact du produit avec une solution d'eau ozonée, dans au moins un bac de traitement apte à être alimenté en eau ozonée pour réaliser le traitement, la solution subissant une agitation durant tout ou partie de la phase de mise en contact, caractérisée en ce qu'elle comporte des moyens d'agitation hydraulique de la solution, aptes à établir au sein du bac un régime d'eau turbulent, permettant la réalisation d'un temps de contact suffisant entre le produit et l'ozone dissous dans la solution pour atteindre le niveau de traitement requis.

12. Installation selon la revendication 11, caractérisée en ce que le dit au moins un bac de traitement est de forme sensiblement parallélépipédique, définissant ainsi une paroi frontale du bac, des parois latérales, ainsi qu'une paroi formant le fond du bac, et en ce que lesdits moyens d'agitation hydraulique de la solution comportent des moyens de recirculation d'au moins une partie de la solution du bac pour réintroduire cette solution recirculée dans le bac en un ou plusieurs point de sa structure.

13. Installation selon la revendication 12, caractérisée en ce que lesdits moyens de recirculation comprennent des arrivées de solution recirculée au niveau de la structure du bac qui sont positionnées selon l'une ou plusieurs combinés des configurations suivantes :
i) la ou lesdites arrivées de solution recirculée sont constituées par au moins une rampe de buses d'injection débouchant dans le bac au niveau d'au moins l'une de ses parois latérales ;
j) la ou lesdites arrivées de solution recirculée sont constituées par au moins une rampe de buses d'injection débouchant dans le bac au niveau de sa paroi frontale ;
k) la ou lesdites arrivées de solution recirculée sont constituées par au moins un couteau, débouchant dans le bac au niveau de la ou les parois formant le fond de ce bac.
